# FASCICULE DE BREVET EUROPEEN

(11) **EP 1 052 386 B1**
(45) Date de publication et mention de la délivrance du brevet: **07.08.2002**
(21) Numéro de dépôt: 00440137.8
(22) Date de dépôt: 10.05.2000
(51) Int. Cl.: F02D 9/10, F16K 27/02

(54) **Dispositif à clapet, collecteur d'admission comportant au moins un tel dispositif et son procédé de fabrication**
Drosselklappenvorrichtung, Saugrohranlage mit wenigstens einer solchen Vorrichtung und Verfahren zu deren Herstellung
Throttle valve device, inlet manifold with at least one such device and manufacturing method thereof

(30) Priorité: 10.05.1999 FR 9906045
(43) Date de publication de la demande: 15.11.2000
(73) Titulaire: Mark IV Systemes Moteurs (Société Anonyme), 92400 Courbevoie (FR)
(72) Inventeur: Andres, Michel, 68100 Mulhouse (FR); Komurian, Richard, 68230 Turckheim (FR)
(74) Mandataire: Franzolin, Luigi

(56) Documents cités:
- EP-A- 0 480 607
- EP-A- 0 538 484
- EP-A- 0 701 057
- EP-A- 0 861 977
- DE-A- 3 905 655
- DE-A- 19 800 207
- US-A- 3 206 163
- US-A- 4 606 368
- US-A- 5 342 019
- PATENT ABSTRACTS OF JAPAN vol. 010, no. 153 (M-484), 3 juin 1986 (1986-06-03) & JP 61 008431 A (HITACHI SEISAKUSHO KK), 16 janvier 1986 (1986-01-16)

## Description

La présente invention concerne le domaine du contrôle de l'écoulement des fluides, notamment gazeux, et plus particulièrement dans le cadre de l'admission d'air pour les moteurs thermiques, par exemple en relation avec les collecteurs d'admission, et a pour objet un dispositif à clapet pour conduit ou analogue, un collecteur d'admission variable comprenant au moins un tel dispositif à clapet et un procédé de fabrication d'un tel collecteur à admission variable.

Il existe actuellement déjà de nombreuses constitutions de dispositifs à clapet pour la régulation du débit et/ou la modification du flux dans un conduit ou analogue.

Ils sont généralement de deux types, à savoir, des sous-ensembles à intercaler entre deux portions de conduit contiguës ou des sous-ensembles prévus dès la conception du dispositif ou de l'installation comprenant le conduit considéré et intégrant le dispositif à clapet, ou au moins son site d'implantation, comme partie constitutive dès l'origine du développement.

Ces dispositifs à clapet présentent toutefois des inconvénients majeurs lorsqu'il s'agit d'en équiper des conduits, et notamment des tubulures de collecteurs d'admission, dont la conception et la construction originelle ne prévoyait pas leur intégration ou qui ont été ou sont fabriqués sans prévision d'un quelconque moyen de régulation de la circulation ou de l'écoulement à travers eux.

En effet, le premier type de dispositifs connus précités entraîne la réalisation de deux interfaces de branchement directement exposées au flux (problème d'étanchéité), la perte de l'unité structurelle du conduit d'origine (problème de tenue mécanique aux vibrations) et des modifications dimensionnelles et d'encombrement dudit conduit.

Le second type de dispositifs connus précités ne permet pas d'équiper a posteriori des conduits déjà existants et nécessite une nouvelle étude de la construction des dispositifs ou installations intégrant le conduit considéré et surtout une modification des outils de fabrication, particulièrement pénalisant en coûts, notamment lorsque ledit conduit est réalisé par moulage de matériau thermoplastique.

Il a également été proposé, en vue de tenter de surmonter les limitations des solutions précitées, des dispositifs à clapet implantables sous forme de "cassettes" comportant, outre le corps de clapet et l'axe de commande de ce dernier, également une portion d'enveloppe entourant le corps de clapet et destinée à former une partie de la paroi interne du conduit, par exemple voir DE 3 905 655.

Toutefois, ces dispositifs à cassettes présentent une constitution très complexe, sont d'un prix de revient élevé et nécessitent pour leur montage un site d'implantation de grande dimension, comportant notamment deux orifices (l'un traversant et l'autre borgne) de grandes tailles en regard, affaiblissant d'autant la résistance structurelle du conduit dans lequel ils sont montés.

Ainsi, aucun des types de dispositifs à clapet mentionnés ci-dessus ne fournit une solution simple, peu fastidieuse et souple à mettre en oeuvre en termes de fabrication et d'installation (également a posteriori) et d'un prix de revient faible.

La présente invention a notamment pour objet de pallier au moins certains des inconvénients précités.

A cet effet, elle a pour objet un dispositif à clapet destiné à être monté dans un conduit, une tubulure ou analogue, postérieurement à la réalisation de ce dernier ou cette dernière, pour contrôler la circulation de fluide dans ce dernier ou cette dernière, selon la revendication 1.

Elle a également pour objet un collecteur à admission variable pour moteur à combustion et son procédé de fabrication, dont une au moins de ses tubulures d'admission est pourvue d'un dispositif à clapet, dont le corps de clapet présente une forme correspondant à la section de passage de la portion de tubulure dans laquelle il est monté et dont l'axe de commande est monté sensiblement perpendiculairement à l'axe longitudinal de ladite portion de tubulure.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe d'un dispositif à clapet selon l'invention monté dans un conduit ;
la figure 2 est une vue en perspective d'une pluralité de dispositifs à clapet et d'un mécanisme de commande commun correspondant ;
les figures 3A et 3B sont respectivement des vues en élévations latérale et frontale d'un corps de clapet faisant partie du dispositif à clapet selon l'invention ;
les figures 4A et 4B sont respectivement des vues frontale et en élévation latérale d'un axe de commande faisant partie du dispositif à clapet selon l'invention ;
les figures 5A, 5B et 5C sont respectivement des vues en élévation latérale, en élévation frontale et en coupe d'un bouchon faisant partie du dispositif à clapet selon l'invention, et,
la figure 6 est une vue partielle, en perspective et partiellement arrachée, d'un collecteur d'admission équipé de plusieurs dispositifs à clapet selon l'invention.

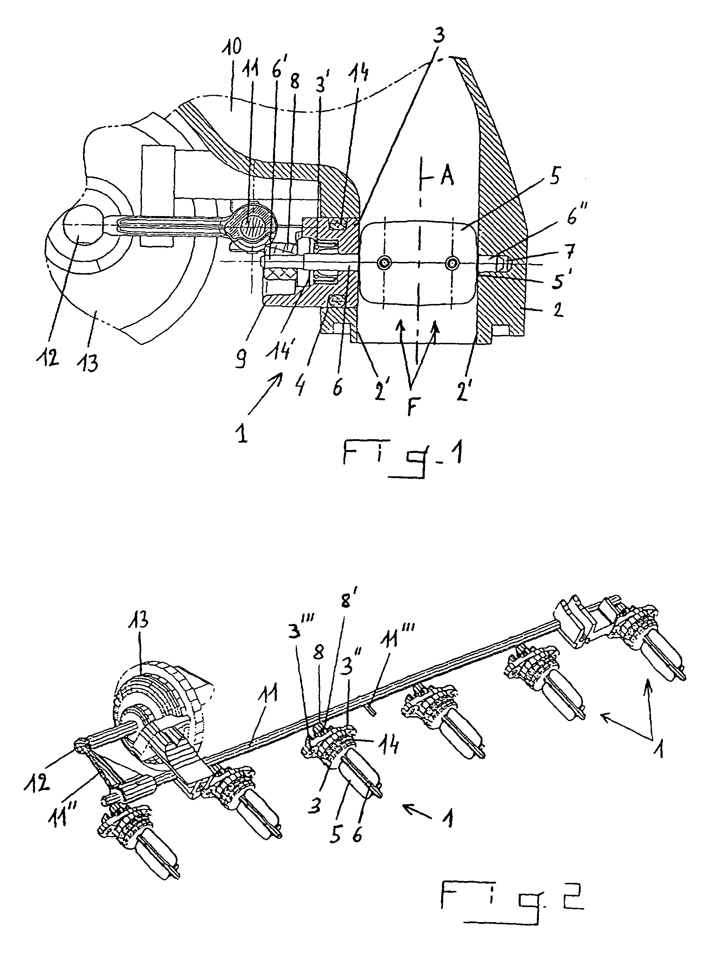

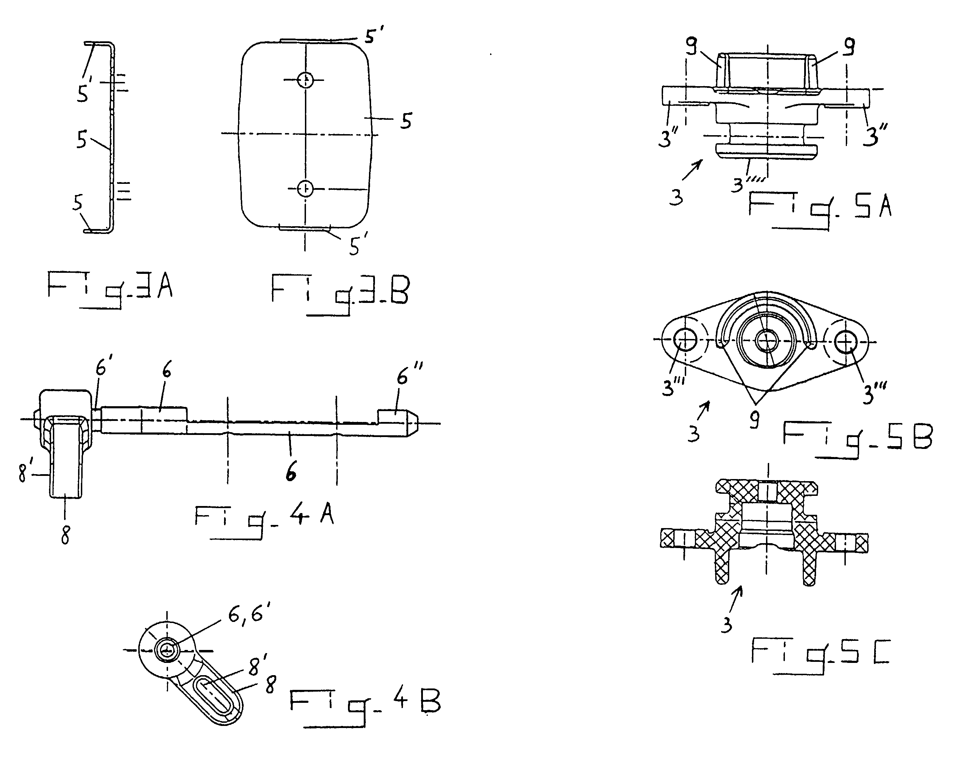

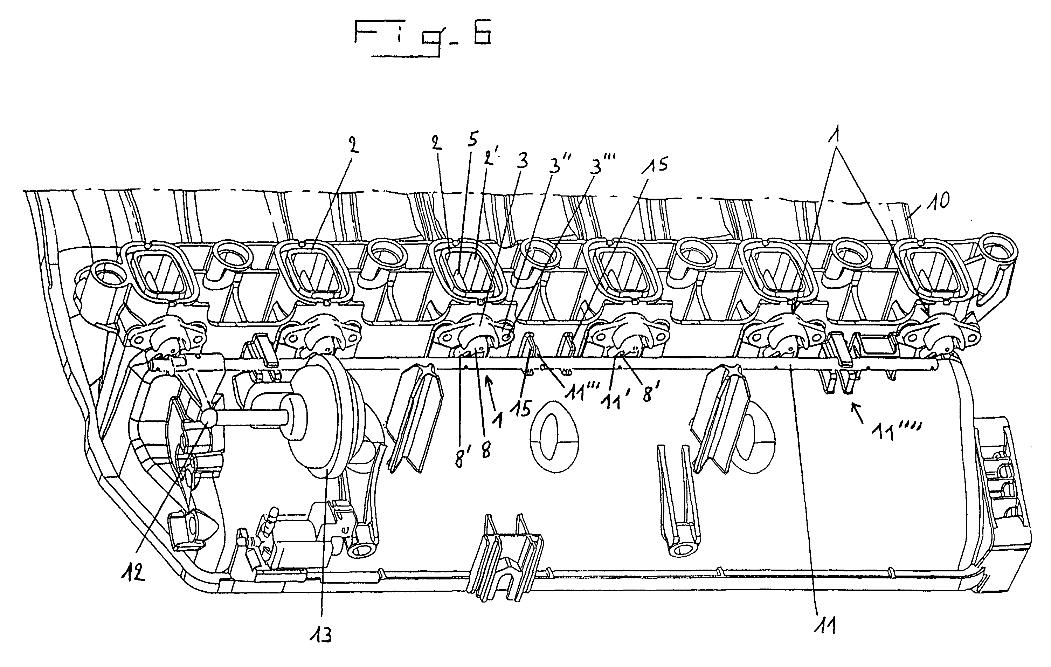

Comme le montrent les figures 1, 2, 3, 4 et 5 des dessins annexés, le dispositif à clapet 1 est principalement constitué, d'une part, par un corps en forme de bouchon 3 destiné à obturer, de manière sensiblement étanche, l'orifice de passage 4 ménagé dans la paroi 2' du conduit 2 pour l'installation (par introduction transversale) du corps de clapet 5 dans ce dernier et intégrant un palier 3' pour le guidage en rotation dudit corps de clapet 5 et, d'autre part, par un ensemble corps de clapet 5/axe de commande 6 monté, avec faculté de rotation, à l'une des extrémités de l'axe 6, dans le palier 3' du bouchon 3 et, à l'autre extrémité dudit axe 6, dans un logement ou trou borgne 7, formant ou comportant un palier adapté, ménagé dans la paroi 2' du conduit 2 en regard de l'orifice de passage 4.

Le bouchon 3 est préférentiellement réalisé en un matériau plastique résistant à la chaleur et aux fluides circulant dans le conduit ou la tubulure 2 et comporte des moyens 3" d'assemblage rigide avec le conduit 2, par exemple sous forme d'au moins deux oreilles de fixation pourvues d'orifices de passage 3"' pour des moyens de solidarisation, tels que par exemple des vis, venant en contact avec la surface externe de la paroi 2' du conduit 2 lorsque ledit bouchon 3 est en position de montage définitif, et assurant une liaison résistant aux changements de pressions dans le conduit 2 et aux chocs et vibrations auxquels ce dernier pourrait être soumis.

Ledit bouchon 3 sera, bien entendu, pourvu d'éléments d'étanchéité 14, 14' sur sa surface en contact avec la paroi de l'orifice de passage 4 et au niveau du passage de l'axe de commande 6.

Ce bouchon 3 pourra être fixé au conduit 2 par des vis autotaraudeuses ou analogues par l'intermédiaire d'oreilles de fixation 3", mais également par d'autres moyens de blocage dudit bouchon 3 en position de montage définitif, tel que par exemple assemblage type quart de tour ou analogue.

En outre, le bouchon 3 sera sensiblement contigü au niveau de sa face 3"" dirigée vers l'intérieur du conduit 2 avec la face interne de la paroi de ce dernier et affleurante avec elle, de manière à ne générer aucune variation de la section de passage et donc aucune perte de charge.

L'ensemble corps de clapet 5/axe de commande 6 peut être réalisé de différentes manières, telles que, par exemple, d'un seul tenant par moulage de matière(s) thermoplastique(s), éventuellement de types différents, par assemblage (soudure, vissage, clipsage, pliage ou analogue) de deux pièces distinctes, métallique(s) et/ou non métallique(s) (par exemple assemblage d'un corps de clapet et d'un axe en matériaux(x) thermoplastique(s)), par surmoulage du corps de clapet 5 sur un axe de commande métallique ou non ou par préassemblage de l'ensemble corps 5/axe de commande 6 avec le bouchon 3 avant le montage du dispositif à clapet 1.

Le palier recevant l'extrémité libre dudit axe 6, opposée à l'extrémité montée dans le bouchon 3, pourra être constitué par le trou borgne 7 lui-même, lorsque le conduit 2 est réalisé en plastique, éventuellement revêtu ou surmoulé d'un matériau plastique à coefficient de friction amélioré.

Toutefois, ce trou borgne 7 pourra, en variante, également comporter un palier rapporté métallique ou plastique, de même que le bouchon 3, tout en conservant toutefois un diamètre de faible dimension et du même ordre de grandeur que celui de l'axe de commande 6.

On notera que le trou borgne 7 et l'orifice de passage 4, alignés entre eux, pourront être réalisés simultanément, en une seule opération, par moulage ou usinage, au moyen d'un unique outil ou insert de forme adaptée.

En outre, l'ensemble corps de clapet 5/axe de commande 6 pourra présenter une forme profilée minimisant les perturbations de l'écoulement dans le conduit 2 en position d'ouverture maximale du dispositif à clapet 1 (débit maximal recherché).

De plus, la face du bouchon 3 tournée vers l'intérieur du conduit 2 pourra être conformée de manière à minimiser l'impact de la présence de l'ensemble corps de clapet 5/axe de commande 6 sur les pertes de charge (forme permettant localement une conservation de la section du conduit 2 et améliorant les performances sur les pertes de charge).

Selon une caractéristique de l'invention, l'axe de commande 6 comprend une portion 6' s'étendant au-delà du bouchon 3 et pourvu d'un élément 8 ou organe d'actionnement solidaire en rotation dudit axe 6, ledit bouchon 3 comportant des moyens 9 de limitation de l'angle de rotation de l'ensemble axe de commande 6/corps de clapet 5.

L'élément d'actionnement 8 pourra, par exemple, consister en une roue dentée (actionnée par une chaîne, un engrenage ou un rail de crémaillère), en une poulie pour courroie crantée ou préférentiellement sous forme de bras de levier ou de bielle dont le débattement par pivotement de l'axe de commande 6 est limité par des butées 9 formées ou rapportées sur le bouchon 3.

Toutefois, le dispositif à clapet 1 pourra, en variante, être pourvu d'un organe d'actionnement actif monté directement sur la portion 6' de l'axe de commande 6, le mouvement dudit organe d'actionnement actif pouvant, le cas échéant, être transmis à un ou plusieurs autres dispositifs à clapet 1.

Le mécanisme de commande autorisera avantageusement une rotation du corps de clapet 5 d'au plus 90° pour permettre le passage d'une configuration d'ouverture totale à une configuration d'obturation totale du passage dans le conduit 2, en pouvant passer par des configurations intermédiaires de fermeture partielle et de modifications ciblées de l'écoulement et du flux.

En outre, la forme du corps de clapet 5 pourra soit correspondre exactement à la section du passage de la portion de réception du conduit 2, soit présenter des dimensions supérieures à ladite section de passage transversale, en présentant une forme correspondant à la surface de section obtenue par une coupure inclinée à travers le conduit 2 et ne nécessitant qu'une rotation angulaire limitée (inférieure à 90°) pour passer d'une configuration ouverte à une configuration fermée et vice-versa.

Le réglage du dispositif à clapet 1 pourra également être réalisé par un moteur électrique, pneumatique ou autre moyen d'actionnement proportionnel ou par une tringlerie à transmission purement mécanique.

En outre, l'axe de commande 6 peut être muni d'une antirotation évitant le coincement du mécanisme en cas de rotation de l'axe de commande lors du fonctionnement.

Le positionnement des butées 9 peut être quelconque, tout en étant préférentiellement centrées pour minimiser les dispersions angulaires dues aux écarts de positionnement potentiels de la tubulure 2 considérée (idem pour l'antirotateur).

Comme le montrent les figures 3A et 3B des dessins annexés, le corps de clapet 5 peut présenter, au niveau de ses extrémités proximales du bouchon 3 et du trou borgne 7 ménagé dans la paroi 2' du conduit 2 des portions pliées 5' destinées à venir en appui glissant respectivement avec la face interne du bouchon 3 et avec la face interne de la zone de paroi 2' du conduit 2 entourant ledit trou borgne 7, ces faces internes présentant préférentiellement, au moins au niveau des zones d'appui, une configuration plane.

On peut ainsi réaliser un maintien sûr en translation du corps de clapet 5 dans la tubulure 2 par pliage de ses extrémités n'autorisant qu'un déplacement réduit du clapet dans la tubulure, le pliage permettant de limiter les usures lors du frottement du clapet avec la paroi interne de la tubulure 2 et du bouchon 3 et de limiter les efforts de frottement.

La présente invention a également pour objet un collecteur à admission variable pour moteur à combustion, dont une au moins des tubulures d'admission 2 est pourvue d'un dispositif à clapet 1, tel que décrit ci-dessus, dont le corps de clapet 5 présente une forme adaptée à la section de passage de la portion de tubulure 2 dans laquelle il est monté et dont l'axe de commande 6 est monté sensiblement perpendiculairement à l'axe longitudinal de ladite portion de tubulure 2 considérée (voir notamment les figures 1, 2 et 6 des dessins annexés).

L'orifice de passage 4 et le logement ou trou 7 pourront être soit formés directement au moment du moulage par injection du collecteur 10, soit usinés dans la ou les tubulures 2 de ce dernier après fabrication du celui-ci.

Selon une caractéristique de l'invention, représentée également sur les figures 1, 2 et 6, plusieurs tubulures d'admission 2, préférentiellement toutes, sont pourvues de dispositifs à clapet 1 dont les éléments d'actionnement 8 correspondants, solidaires en rotation des axes de commande 6 portant les corps de clapet 5, sont en liaison d'entraînement avec un mécanisme 11, 12, 13 de commande simultanée et synchrone des différents dispositifs à clapet 1 montés sur ledit collecteur 10.

De manière avantageuse, les éléments d'actionnement 8 des dispositifs à clapet 1 consistent en des bras de leviers ou bielles fixé(e)s perpendiculairement sur les axes de commande 6 et pourvu(e)s chacun(e) d'un orifice oblong 8' s'étendant dans la direction longitudinale dudit élément 8.

En outre, le mécanisme 11, 12, 13 de commande peut comprendre notamment une tige 11 munie d'ergots 11' s'engageant un à un respectivement dans lesdits orifices oblongs 8' desdits bras de levier 8 et assemblée mécaniquement avec le collecteur 10 avec faculté de translation uniquement dans une direction sensiblement orthogonale aux différents axes de commande 6.

La commande par une tige 11 coulissante dans une direction parallèle à la direction de la dimension maximale du collecteur 10, permet de limiter les débattements et l'encombrement résultant et de réaliser une liaison mécanique avec le collecteur 10 supportant l'environnement vibratoire auquel ce dernier est soumis.

Ladite tige 11 pourra, en variante, être guidée dans son mouvement par les bielles 8 des axes de commande 6 (liaisons rotules) ou être coulissante entre au moins deux guidages, voire coulissante dans un seul guidage (guidage par clipsage ou autre).

Selon une caractéristique supplémentaire de l'invention représentée notamment aux figures 1, 2 et 6 des dessins annexés, la tige coulissante 11 est déplacée en translation par l'intermédiaire d'une articulation 12 présentant plusieurs degrés de liberté, sauf en translation dans la direction de coulissement de ladite tige 11, par exemple une articulation sphérique ou à rotule située au bout d'un bras d'entraînement 11' de ladite tige 11.

Toutefois, en variante, la tige coulissante 11 pourra être déplacée en translation par un organe d'actionnement actif monté directement sur la portion 6' de l'axe de commande 6 d'un des dispositifs à clapet 1, par exemple par un organe du type moteur électrique pas à pas ou moteur hydraulique.

Cette variante de réalisation autorise un gain de place supplémentaire, une limitation de la longueur de la chaîne cinématique et une réduction du nombre de composants formant le mécanisme de commande.

La tige 11 pourra également être pourvue d'au moins un ergot 11"' de limitation de course, venant en butée contre des portions de paroi d'arrêt 15 rapportées ou formées sur le collecteur 10, ladite tige 11 étant guidée en translation par des moyens de guidage adaptés 11"" formés ou rapportés sur ledit collecteur.

Enfin, la présente invention concerne également un procédé de fabrication d'un collecteur d'admission dont au moins l'une des tubulures d'admission présente un débit variable contrôlé.

Ce procédé consiste principalement à fournir au moins un sous-ensemble 1 (corps de clapet 5/axe de commande 6/bouchon 3) et un collecteur d'admission 10 pourvu d'au moins une tubulure 2, à mettre en place et à caler ledit au moins un sous-ensemble 1 dans ladite au moins une tubulure 2 par l'intermédiaire d'un orifice de passage 4 radial ménagé dans la paroi 2' de ladite tubulure 2, à solidariser ledit sous-ensemble 1 avec ladite tubulure 2, à répéter le cas échéant ces trois dernières opérations pour un ou plusieurs autres sous-ensembles 1 et tubulures 2 et, enfin, à réaliser le montage sur ledit collecteur 10 d'une partie au moins d'un mécanisme 11, 12, 13 de commande destinée à coopérer de manière fonctionnelle avec ledit ou lesdits sous-ensembles 1.

Le procédé peut consister plus précisément à fournir, d'une part, au moins un dispositif à clapet 1 composé d'un ensemble corps de clapet 5/axe de commande 6 et d'un corps en forme de bouchon 3 pourvu d'un palier 3' pour le montage en porte à faux et le guidage en rotation de l'axe de commande 6, le cas échéant sous forme préassemblée, et, d'autre part, un collecteur 10 dont la paroi 2' de l'une au moins de ses tubulures d'admission 2 est pourvue d'un orifice de passage 4 et d'un logement ou trou borgne 7 sur la zone de paroi 2' en regard dudit orifice de passage 4 et centré par rapport à ce dernier, à introduire l'ensemble corps de clapet 5/axe de commande 6 dans la tubulure d'admission 2 à travers l'orifice de passage 4, à positionner l'extrémité libre 6" de l'axe de commande 6 dans le trou borgne 7, à obturer l'orifice de passage 4 avec le bouchon 3 tout en calant le dispositif à clapet 1 en position dans ladite tubulure 2 et à solidariser ledit bouchon 3 avec la paroi 2' de ladite tubulure 2, à répéter, le cas échéant, ces trois dernières opérations avec un ou plusieurs autres dispositifs à clapet 1 et pour une ou plusieurs autres tubulures d'admission 2 et, enfin, à monter sur le collecteur 10 la partie 11 du mécanisme 11, 12, 13 de commande solidaire de ce dernier et en liaison d'entraînement avec lesdits dispositifs à clapet 1.

Grâce à l'invention, il est donc possible de proposer une solution technique permettant de modifier les caractéristiques des turbulences de l'air dans la chambre de combustion (dans le cas d'une application à un collecteur d'admission), peu encombrante et n'entraînant que peu de modifications au niveau desdits collecteurs, par une adaptation simple et additionnelle de dispositifs à clapets 1 à des collecteurs 10 existants.

## Revendications

1. Dispositif à clapet destiné à être monté dans un conduit, une tubulure ou analogue, postérieurement à la réalisation de ce dernier ou cette dernière, pour contrôler la circulation de fluide dans ce dernier ou cette dernière, dispositif constitué, d'une part, par un corps en forme de bouchon (3) destiné à obturer, de manière sensiblement étanche, l'orifice de passage radial (4) ménagé dans la paroi (2') du conduit (2) pour l'installation du corps de clapet (5) dans ce dernier et intégrant un palier (3') pour le guidage en rotation dudit corps de clapet (5) et, d'autre part, par un ensemble corps de clapet (5)/axe de commande (6) monté, avec faculté de rotation, à l'une des extrémités de l'axe (6), dans le palier (3') du bouchon (3) et, à l'autre extrémité dudit axe (6), dans un logement ou trou borgne (7), formant ou comportant un palier adapté, ménagé dans la paroi (2') du conduit (2) en regard de l'orifice de passage (4), une face extérieure du bouchon (3) tournée vers l'intérieur du conduit (2) étant conformée pour permettre une conservation locale de la section dudit conduit (2) et le corps de clapet (5) présentant une forme adaptée à la section de passage dudit conduit (2) dans lequel il est monté.

2. Dispositif à clapet selon la revendication 1, **caractérisé en ce que** le bouchon (3) comporte des moyens (3") d'assemblage rigide avec le conduit (2), par exemple sous forme d'au moins deux oreilles de fixation pourvues d'orifices de passage (3"') pour des moyens de solidarisation, tels que par exemple des vis, venant en contact avec la surface externe de la paroi (2') du conduit (2) lorsque ledit bouchon (3) est en position de montage définitif.

3. Dispositif à clapet selon l'une quelconque des revendications 1 et 2, **caractérisé en ce que** l'axe de commande (6) comprend une portion (6') s'étendant au-delà du bouchon (3) et pourvu d'un élément (8) ou organe d'actionnement solidaire en rotation dudit axe (6), ledit bouchon (3) comportant des moyens (9) de limitation de l'angle de rotation de l'ensemble axe de commande (6)/corps de clapet (5).

4. Dispositif à clapet selon la revendication 3, **caractérisé en ce que** l'élément d'actionnement (8) présente une forme de bras de levier ou de bielle dont le débattement par pivotement de l'axe de commande (6) est limité par des butées (9) formées ou rapportées sur le bouchon (3).

5. Dispositif à clapet selon la revendication 3, **caractérisé en ce** l'organe d'actionnement actif est monté directement sur la portion (6') de l'axe de commande (6).

6. Dispositif à clapet selon l'une quelconque des revendications 1 à 5, **caractérisé en ce que** le corps de clapet (5) présente, au niveau de ses extrémités proximales du bouchon (3) et du trou borgne (7) ménagé dans la paroi (2') du conduit (2) des portions pliées (5') destinées à venir en appui glissant respectivement avec la face interne du bouchon (3) et avec la face interne de la zone de paroi (2') du conduit (2) entourant ledit trou borgne (7), ces faces internes présentant préférentiellement, au moins au niveau des zones d'appui, une configuration plane.

7. Dispositif à clapet selon l'une quelconque des revendications 1 à 6, **caractérisé en ce que** l'ensemble corps de clapet (5) / axe de commande (6) est réalisé d'un seul tenant par moulage de matière(s) thermoplastique(s), éventuellement de types différents.

8. Collecteur à admission variable pour moteur à combustion, **caractérisé en ce qu'**une au moins des tubulures d'admission (2) est pourvue d'un dispositif à clapet (1) selon l'une quelconque des revendications 1 à 7, dont le corps de clapet (5) présente une forme adaptée à la section de passage de la portion de tubulure (2) dans laquelle il est monté et dont l'axe de commande (6) est monté sensiblement perpendiculairement à l'axe longitudinal de ladite portion de tubulure (2).

9. Collecteur selon la revendication 8, **caractérisé en ce que** plusieurs tubulures d'admission (2), préférentiellement toutes, sont pourvues de dispositifs à clapet (1) dont les éléments d'actionnement (8) correspondants, solidaires en rotation des axes de commande (6) portant les corps de clapet (5), sont en liaison d'entraînement avec un mécanisme (11, 12, 13) de commande simultanée et synchrone des différents dispositifs à clapet (1) montés sur ledit collecteur (10).

10. Collecteur selon la revendication 9, **caractérisé en ce que** les éléments d'actionnement (8) des dispositifs à clapet (1) consistent en des bras de leviers ou bielles fixé(e)s perpendiculairement sur les axes de commande (6) et pourvu(e)s chacun(e) d'un orifice oblong (8') s'étendant dans la direction longitudinale dudit élément (8) et **en ce que** le mécanisme (11, 12, 13) de commande comprend notamment une tige (11) munie d'ergots (11') s'engageant respectivement dans lesdits orifices oblongs (8') desdits bras de levier (8) et assemblée mécaniquement avec le collecteur (10) avec faculté de translation dans une direction sensiblement orthogonale aux différents axes de commande (6).

11. Collecteur selon la revendication 10, **caractérisé en ce que** la tige coulissante (11) est déplacée en translation par l'intermédiaire d'une articulation (12) présentant plusieurs degrés de liberté, sauf en translation dans la direction de coulissement de ladite tige (11), par exemple une articulation sphérique ou à rotule.

12. Collecteur selon la revendication 10, **caractérisé en ce que** la tige coulissante (11) est déplacée en translation par un organe d'actionnement actif monté directement sur la portion (6') de l'axe de commande (6) d'un des dispositifs à clapet (1).

13. Procédé de fabrication d'un collecteur d'admission dont au moins l'une des tubulures d'admission présente un débit variable contrôlé, **caractérisé en ce qu'**il consiste à fournir au moins un sous-ensemble (1) corps de clapet (5)/axe de commande (6)/bouchon (3) et un collecteur d'admission (10) pourvu d'au moins une tubulure (2), à mettre en place et à caler ledit au moins un sous-ensemble (1) dans ladite au moins une tubulure (2) par l'intermédiaire d'un orifice de passage (4) radial ménagé dans la paroi (2') de ladite tubulure (2), une face extérieure du bouchon (3) tournée vers l'intérieur du conduit (2) étant conformée pour permettre une conservation locale de la section dudit conduit, à solidariser ledit sous-ensemble (1) avec ladite tubulure (2), à répéter le cas échéant ces trois dernières opérations pour un ou plusieurs autres sous-ensembles (1) et tubulures (2) et, enfin, à réaliser le montage sur ledit collecteur (10) d'une partie au moins d'un mécanisme (11, 12, 13) de commande destinée à coopérer de manière fonctionnelle avec ledit ou lesdits sous-ensembles (1).

14. Procédé de fabrication selon la revendication 13, **caractérisé en ce qu'**il consiste à fournir, d'une part, au moins un dispositif à clapet (1) composé d'un ensemble corps de clapet (5)/axe de commande (6) et d'un corps en forme de bouchon (3) pourvu d'un palier (3') pour le montage en porte à faux et le guidage en rotation de l'axe de commande (6), le cas échéant sous forme préassemblée, et, d'autre part, un collecteur (10) dont la paroi (2') de l'une au moins de ses tubulures d'admission (2) est pourvue d'un orifice de passage (4) et d'un logement ou trou borgne (7) sur la zone de paroi (2') en regard dudit orifice de passage (4) et centré par rapport à ce dernier, à introduire l'ensemble corps de clapet (5)/axe de commande (6) dans la tubulure d'admission (2) à travers l'orifice de passage (4), à positionner l'extrémité libre (6") de l'axe de commande (6) dans le trou borgne (7), à obturer l'orifice de passage (4) avec le bouchon (3) tout en calant le dispositif à clapet (1) en position dans ladite tubulure (2) et à solidariser ledit bouchon (3) avec la paroi (2') de ladite tubulure (2), à répéter, le cas échéant, ces trois dernières opérations avec un ou plusieurs autres dispositifs à clapet (1) et pour une ou plusieurs autres tubulures d'admission (2) et, enfin, à monter sur le collecteur (10) la partie (11) du mécanisme (11, 12, 13) de commande solidaire de ce dernier et en liaison d'entraînement avec lesdits dispositifs à clapet (1).

## Claims

1. Valve device intended to be mounted in a conduit, a ducting or the like, after the production of the latter, in order to control the circulation of fluid in the latter, the said device consisting, on the one hand, of a plug-shaped body (3) intended for shutting off in a substantially leak-tight manner the radial passage orifice (4) made in the wall (2') of the conduit (2) for the installation of the valve body (5) in the latter and incorporating a bearing (3') for guiding the said valve body (5) in rotation, and, on the other hand, of a valve-body (5)/control-spindle (6) assembly mounted, with the capability of rotation, at one of the ends of the spindle (6), in the bearing (3') of the plug (3) and, at the other end of the said spindle (6), in a receptacle or blind hole (7) forming or comprising a suitable bearing and made in the wall (2') of the conduit (2) opposite the passage orifice (4), an outer face of the plug (3) facing towards the inside of the conduit (2) being shaped in order to make it possible to preserve locally the cross section of the said conduit (2) and the valve body (5) having a shape adapted to the passage cross section of the said conduit (2) in which it is mounted.

2. Valve device according to Claim 1, **characterized in that** the plug (3) comprises means (3'') for rigid assembly together with the conduit (2), for example in the form of at least two fastening lugs provided with passage orifices (3''') for means for fixing together, such as, for example, screws, coming into contact with the outer surface of the wall (2') of the conduit (2) when the said plug (3) is in the final mounting position.

3. Valve device according to either of Claims 1 and 2, **characterized in that** the control spindle (6) comprises a portion (6') extending beyond the plug (3) and provided with an actuating element (8) or member integral in terms of rotation with the said spindle (6), the said plug (3) comprising means (9) for limiting the angle of rotation of the control-spindle (6)/valve-body (5) assembly.

4. Valve device according to Claim 3, **characterized in that** the actuating element (8) is in the form of a lever arm or link, of which the deflection as a result of the pivoting of the control spindle (6) is limited by stops (9) formed on or attached to the plug (3).

5. Valve device according to Claim 3, **characterized in that** the active actuating member is mounted directly on the portion (6') of the control spindle (6).

6. Valve device according to any one of Claims 1 to 5, **characterized in that** the valve body (5) has, at its ends proximal to the plug (3) and to the blind hole (7) made in the wall (2') of the conduit (2), bent portions (5') intended to come into sliding bearing contact respectively with the inner face of the plug (3) and with the inner face of the wall zone (2') of the conduit (2) surrounding the said blind hole (7), these inner faces preferably having a planar configuration at least in the region of the bearing zones.

7. Valve device according to any one of Claims 1 to 6, **characterized in that** the valve-body (5)/control-spindle (6) assembly is produced in one piece by the moulding of thermoplastic or thermoplastics, if appropriate of different types.

8. Variable-intake manifold for an internal combustion engine, **characterized in that** at least one of the intake ductings (2) is provided with a valve device (1) according to any one of Claims 1 to 7, the valve body (5) of which has a shape adapted to the passage cross section of the ducting portion (2) in which it is mounted, and the control spindle (6) of which is mounted substantially perpendicularly to the longitudinal axis of the said ducting portion (2).

9. Manifold according to Claim 8, **characterized in that** a plurality of intake ductings (2), preferably all, are provided with valve devices (1), of which the corresponding actuating elements (8), integral in terms of rotation with the control spindles (6) carrying the valve bodies (5), are drive-connected to a mechanism (11, 12, 13) for the simultaneous and synchronous control of the various valve devices (1) mounted on the said manifold (10).

10. Manifold according to Claim 9, **characterized in that** the actuating elements (8) of the valve devices (1) consist of lever arms or links which are fastened perpendicularly to the control spindles (6) and are each provided with an oblong orifice (8') extending in the longitudinal direction of the said element (8), and **in that** the control mechanism (11, 12, 13) comprises, in particular, a rod (11) which is provided with catches (11') engaging respectively into the said oblong orifices (8') of the said lever arms (8) and which is assembled mechanically together with the manifold (10), with the capability of translational movement in a direction substantially orthogonal to the various control spindles (6).

11. Manifold according to Claim 10, **characterized in that** the sliding rod (11) is displaced in translational movement by means of a joint (12) having a plurality of degrees of freedom, except in translational movement in the sliding direction of the said rod (11), for example a spherical or ball-and-socket joint.

12. Manifold according to Claim 10, **characterized in that** the sliding rod (11) is displaced in translational movement by means of an active actuating member mounted directly on the portion (6') of the control spindle (6) of one of the valve devices (1).

13. Method for the manufacture of an intake manifold, at least one of the intake ductings of which has a controlled variable delivery, **characterized in that** it involves supplying at least one valve-body (5)/control-spindle (6)/plug (3) subassembly (1) and an intake manifold (10) provided with at least one ducting (2), putting in place and wedging the said at least one subassembly (1) in the said at least one ducting (2) via a radial passage orifice (4) made in the wall (2') of the said ducting (2), an outer face of the plug (3) facing towards the inside of the conduit (2) being shaped in order to make it possible to preserve locally the cross section of the said conduit, fixing the said subassembly (1) together with the said ducting (2), if appropriate repeating these last three operations for one or more other subassemblies (1) and ductings (2), and, finally, carrying out the mounting on the said manifold (10) of at least part of a control mechanism (11, 12, 13) which is intended for cooperating functionally with the said subassembly or subassemblies (1).

14. Manufacturing method according to Claim 13, **characterized in that** it involves supplying, on the one hand, at least one valve device (1) composed of a valve-body (5)/control-spindle (6) assembly and of a plug-shaped body (3) provided with a bearing (3') for the overhung mounting and guidance in rotation of the control spindle (6), if appropriate in preassembled form, and, on the other hand, a manifold (10), of which the wall (2') of at least one of its intake ductings (2) is provided with a passage orifice (4) and with a receptacle or blind hole (7) on the wall zone (2') opposite the said passage orifice (4) and centred in relation to the latter, introducing the valve-body (5)/control-spindle (6) assembly into the intake ducting (2) through the passage orifice (4), positioning the free end (6'') of the control spindle (6) in the blind hole (7), shutting off the passage orifice (4) by means of the plug (3), while at the same time wedging the valve device (1) in position in the said ducting (2), and fixing the said plug (3) together with the wall (2') of the said ducting (2), if appropriate repeating these last three operations with one or more other valve devices (1) and for one or more other intake ductings (2), and, finally, mounting on the manifold (10) that part (11) of the control mechanism (11, 12, 13) which is integral with the latter and is drive-connected to the said valve devices (1).

## Patentansprüche

1. Drosselklappenvorrichtung zum Einbau in eine Leitung, ein Rohr oder dergleichen, im Anschluß an die Ausbildung derselben oder desselben, um die Fluidzirkulation in derselben oder demselben zu steuern, wobei die Vorrichtung einerseits aus einem Körper in Form eines Stopfens (3) besteht, der zum im wesentlichen dichten Verschließen der radialen Durchgangsöffnung (4) in der Wand (2') der Leitung (2) zum Einsetzen des Drosselklappenkörpers (5) in dieser dient und ein Lager (3') zur Drehführung des Drosselklappenkörpers (5) umfaßt, und die Vorrichtung andererseits aus einer Einheit aus Drosselventilkörper (5) und Steuerachse (6) besteht, die drehbar an einem der Enden der Achse (6) im Lager (3') des Stopfens (3) und am anderen Ende der Achse (6) in einer Aufnahme oder einem Sackloch (7) angeordnet ist, das ein angepaßtes Lager aufweist und in der Wand (2') der Leitung (2) gegenüber der Durchgangsöffnung (4) ausgebildet ist, wobei eine dem Inneren der Leitung (2) zugewandte Außenseite des Stopfens (3) derart ausgebildet ist, daß der Querschnitt der Leitung (2) lokal beibehalten wird, und wobei der Drosselklappenkörper (5) eine an den Querschnitt der Durchgangsöffnung (2), in der er angebracht ist, angepasste Form aufweist.

2. Drosselklappenvorrichtung nach Anspruch 1, **dadurch gekennzeichnet, daß** der Stopfen (3) Einrichtungen (3") zum festen Verbinden mit der Leitung (2) aufweist, beispielsweise in Form wenigstens zweier Befestigungsösen mit Durchgangsöffnungen (3"') für Befestigungseinrichtungen, wie beispielsweise Schrauben, die an der Außenfläche der Wand (2') der Leitung anliegen, wenn der Stopfen (3) sich in der endgültigen Montageposition befindet.

3. Drosselklappenvorrichtung nach einem der Ansprüche 1 und 2, **dadurch gekennzeichnet**, däß die Steurerachse (6) einen Bereich (6') aufweist, der sich über den Stopfen (3) hinaus erstreckt und mit einem drehfest mit der Achse (6) ausgebildeten Betätigungselement (8) oder -organ versehen ist, wobei der Stopfen (3) eine Einrichtung (9) zum Begrenzen des Drehwinkels der Einheit aus Steuerachse (6) und Drosselklappenkörper (5) aufweist.

4. Drosselklappenvorrichtung nach Anspruch 3, **dadurch gekennzeichnet, daß** das Betätigungselement (8) die Form eines Hebelarms oder einer Pleuelstange hat, deren Auslenkung durch das Schwenken der Steuerachse (6) durch Anschläge (9) begrenzt ist, die auf dem Stopfen (3) ausgebildet oder angesetzt sind.

5. Drosselklappenvorrichtung nach Anspruch 3, **dadurch gekennzeichnet, daß** das aktive Betätigungsorgan direkt auf dem Bereich (6') der Steuerachse (6) angebracht ist.

6. Drosselklappenvorrichtung nach einem der Ansprüche 1 bis 5, **dadurch gekennzeichnet, daß** der Drosselklappenkörper (5) an seinen dem Stopfen (3) und dem in der Wand (2') der Leitung (2) ausgebildeten Sackloch (7) zugewandten Enden gebogene Bereiche (5') aufweist, die dazu dienen jeweils gleitend an der Innenfläche des Stopfens (3) und der Innenseite der Zone der Wand (2') der Leitung (2) anzuliegen, welche das Sackloch (7) umgibt, wobei die Innenflächen vorzugsweise wenigstens an den Anlagezonen eine ebene Ausbildung haben.

7. Drosselklappenvorrichtung nach einem der Ansprüche 1 bis 6, **dadurch gekennzeichnet, daß** die Einheit aus Drosselklappenkörper (5) und Steuerachse (6) einstückig durch Gießen von thermoplastischem/-en Material/-ien, eventuell von verschiedener Art, hergestellt ist.

8. Saugrohr mit variablem Einlaß für Verbrennungsmotoren, **dadurch gekennzeichnet, daß** wenigstens eines der Einlaßrohre (2) mit einer Drosselklappenvorrichtung (1) nach einem der Ansprüche 1 bis 7 versehen ist, deren Drosselklappenkörper (5) eine an den Durchlaßquerschnitt des Bereichs des Rohres (2), in dem er eingebaut ist, angepaßten Querschnitt aufweist, und deren Steuerachse (6) im wesentlichen senkrecht zur Längsachse des Bereichs des Rohres (2) angebracht ist.

9. Saugrohr nach Anspruch 8, **dadurch gekennzeichnet, daß** mehrere Einlaßrohre (2), vorzugsweise alle, mit Drosselklappenvorrichtungen (1) versehen sind, deren entsprechende Betätigungselemente (8), die drehfest mit der die Drosselklappenkörper (5) tragenden Steuerachsen verbunden sind, in Antriebsverbindung mit einem Mechanismus (11, 12, 13) zum gleichzeitigen und synchronen Antreiben der verschiedenen am Saugrohr (10) angebrachten Drosselklappenvorrichtungen (1) stehen.

10. Saugrohr nach Anspruch 9, **dadurch gekennzeichnet, daß** die Betätigungselemente (8) der Drosselklappenvorrichtungen (1) aus Hebelarmen oder Pleuelstangen bestehen, die senkrecht zu den Steuerachsen (6) angebracht und jeweils mit einem langgestreckten Öffnung (8') versehen sind, die sich in Längsrichtung des Elements (8) erstrecken, und daß der Steuermechanismus (11 12, 13) insbesondere eine Stange (11) aufweist, die mit Vorsprüngen (11') versehen ist, die jeweils in die langgestreckten Öffnungen (8') der Hebelarme (8) eingreifen, und mechanisch mit dem Saugrohr (10) in eine im wesentlichen orthogonal zu den verschiedenen Steuerachsen (6) verschiebbar verbunden ist.

11. Saugrohr nach Anspruch 10, **dadurch gekennzeichnet, daß** die gleitende Stange (11) durch ein Gelenk (12), beispielsweise ein sphärisches oder ein Kugelgelenk, verschoben wird, das mehrere Freiheitsgrade aufweist, außer bei der Verschiebung in Gleitrichtung der Stange (11).

12. Saugrohr nach Anspruch 10, **dadurch gekennzeichnet, daß** die Gleitstange (11) durch ein aktives Betätigungsorgan verschoben wird, das direkt auf dem Bereich (6') der Steuerachse (6) einer der Drosselklappenvorrichtungen (1) angebracht ist.

13. Verfahren zur Herstellung eines Saugrohres, bei dem wenigstens ein Einlaßrohr einen geregelten variablen Durchsatz hat, **dadurch gekennzeichnet, daß** das Verfahren die folgenden Schritte aufweist: Vorsehen wenigstens einer Untereinheit (1) aus Drosselklappenkörper (5), Steuerachse (6), Stopfen (3) und einem Saugrohr (10), das mit wenigstens einem Rohr (2) versehen ist, Anordnen und Verkeilen der wenigstens einen Untereinheit (1) in dem wenigstens einen Rohr (2) durch eine in der Wand (2') des Rohrs (2) ausgebildete radiale Durchgangsöffnung (4) hindurch, wobei eine dem Inneren der Leitung (2) zugewandte Außenseite des Stopfens (3) derart ausgebildet ist, daß der Querschnitt der Leitung (2) lokal beibehalten wird, Verbinden der Untereinheit (1) mit dem Rohr (2), gegebenenfalls Wiederholen der drei letzten Vorgänge für eine oder mehrere andere Untereinheiten (1) und Rohre (2), und schließlich Montieren wenigstens eines Teils eines Steuermechanismus (11,12,13) am Saugrohr (10), der funktionsmäßig mit der Untereinheit oder den Untereinheiten (1) zusammenwirkt.

14. Verfahren zur Herstellung nach Anspruch 13, **dadurch gekennzeichnet, daß** es die folgenden Schritte aufweist: Vorsehen, einerseits, wenigstens einer Drosselklappenvorrichtung (1), bestehend aus einer Einheit aus Drosselklappenkörper (5) und Steuerachse (6) und einem Körper in Form eines Stopfens (3), der mit einem Lager (3') zum freitragenden Einbau und zur Drehführung der Steuerachse (6) versehen ist, gegebenenfalls in vormontierter Form, und, andererseits, eines Saugrohres (10), bei dem die Wand (2') wenigstens eines der Einlaßrohre (2) mit einer Durchgangsöffnung (4) versehen ist und eine Aufnahme oder ein Sackloch (7) in dem der Durchgangsöffnung (4) gegenüberliegenden Bereich der Wand (2') auf die Durchgangsöffnung zentriert ausgebildet ist, Einsetzen der Einheit aus Drosselklappenkörper (5) und Steuerachse (6) in das Einlaßrohr (2) durch die Durchgangsöffnung (4) hindurch, Positionieren des freien Endes (6") der Steuerachse (6) in dem Sackloch (7), Verschließen der Durchgangsöffnung (4) mit dem Stopfen (3) unter Verkeilen der Drosselklappenvorrichtung (1) in ihrer Position in dem Rohr (2), und Verbinden des Stopfens (3) mit der Wand (2') des Rohrs (2), gegebenenfalls Wiederholen der drei letzten Operationen für eine oder mehrere andere Drosselklappenvorrichtungen (1) und eines oder mehrere andere Einlassrohre (2), und schließlich Montieren wenigstens eines Teils (11) des Steuermechanismus (11,12,13) am Saugrohr (10), in fester Verbindung mit diesem und in Antriebsverbindung mit den Drosselklappenvorrichtungen (1).
